**Europäisches Patentamt**

**European Patent Office**

**Office européen des brevets**

(11) Veröffentlichungsnummer: **0 157 128**
**A1**

(12) **EUROPÄISCHE PATENTANMELDUNG**

(21) Anmeldenummer: 85101416.7

(22) Anmeldetag: 11.02.85

(51) Int. Cl.⁴: **A 47 J 43/046, A 47 J 43/08**

(30) Priorität: 09.03.84 DE 3408693

(43) Veröffentlichungstag der Anmeldung: 09.10.85
Patentblatt 85/41

(84) Benannte Vertragsstaaten: **DE FR GB IT NL**

(71) Anmelder: **ROBERT KRUPS STIFTUNG & CO. KG.,**
**Heresbachstrasse 29, D-5650 Solingen 19 (DE)**

(72) Erfinder: **Maass, Rudolf, Sperlingsweg 45,**
**D-5650 Solingen 1 (DE)**
Erfinder: **Henn, Stefan, Dipl.-Ing., Wieden 29,**
**D-5650 Solingen 1 (DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114 Postfach 20 02 10,**
**D-5600 Wuppertal 2 (DE)**

(54) Elektrisch betriebenes Gerät für die Bearbeitung und Zubereitung von Nahrungsmitteln aller Art.

(57) Elektrisch betriebenes Gerät für die Bearbeitung und Zubereitung von Nahrungsmitteln aller Art, mit einem Gehäuse zur Unterbringung des Elektromotors und von zugehörigen Schalt-und Steuereinrichtungen, mit einem neben dem Gehäuse angeordneten Aufnahmebehälter, in dessen Inneren ein Arbeitswerkzeug angeordnet ist, dessen Arbeitswelle (42) an ihrem freien Ende ein Rad (40) trägt, das seinerseits einen Riemen, vorzugsweise einen Zahnriemen, aufnimmt, der über ein weiteres Rad geführt ist, welches auf dem freien Ende der Motorwelle befestigt ist und mit einem Lüfterrad zum Erzeugen von Kühlluft für den Elektromotor. Um ein zusätzliches Lüfterrad zu vermeiden, ist eines der beiden Räder für den Riemen unmittelbar als Lüfterrad (43) ausgebildet. Bevorzugt ist dies das auf der Arbeitswelle des Gerätes angeordnete Rad, wobei dieses Lüfterrad durchmessermäßig um ein Vielfaches größer ist als das auf der Motorwelle angeordnete Rad.

**PATENTANWÄLTE**

**DIPL.-PHYS. BUSE · DIPL.-PHYS. MENTZEL · DIPL.-ING. LUDEWIG**

Unterdörnen 114 · Postfach 200210 · 5600 Wuppertal 2 · Fernruf (0202) 55 70 22/23/24 · Telex 8 591 606 wpat

0157128

89

5600 Wuppertal 2, den

Kennwort: Lüfterrad

Firma Robert Krups Stiftung & Co. KG., Heresbachstr. 29, 5650 Solingen 19

-------------------------------------------------------------------

### Elektrisch betriebenes Gerät für die Bearbeitung und Zubereitung von Nahrungsmitteln aller Art

-------------------------------------------------------------------

Die Erfindung bezieht sich auf ein elektrisch betriebenes Gerät für die Bearbeitung und Zubereitung von Nahrungsmitteln aller Art, mit einem Gehäuse zur Unterbringung des Elektromotors und von zugehörigen Schalt- und Steuereinrichtungen, mit einem neben dem Gehäuse angeordneten Aufnahmebehälter, in dessen Inneren ein Arbeitswerkzeug angeordnet ist, dessen Arbeitswelle an ihrem freien Ende ein Rad trägt, das seinerseits einen Riemen, vorzugsweise einen Zahnriemen aufnimmt, der über ein weiteres Rad geführt ist, welches auf dem freien Ende der Motorwelle befestigt ist und mit einem Lüfterrad zum Erzeugen von Kühlluft für den Elektromotor.

Bei einer bekannten Ausführungsform eines solchen elektrisch betriebenen Gerätes für das Bearbeiten und Zubereiten von Nahrungsmitteln ist ein besonderes, also zusätzliches Lüfterrad vorgesehen, das auf dem freien Ende der Motorwelle des Elektromotors befestigt ist. Dabei sind das eine Rad für den Riemen und das Lüfterrad in hintereinander liegender Anordnung auf der Motorwelle angeordnet. Diese bekannte Ausführungsform bedingt die Verwendung eines besonderen, also zusätzlichen Lüfterrades, das darüber hinaus mit ihm zugeordneten Befestigungsmitteln drehfest auf der Motorwelle anzubringen ist. Dies erhöht den Arbeitsaufwand bei der Herstellung und der Montage. Darüber hinaus ergibt sich durch die gewählte Hintereinanderanordnung von Rad und Lüfterrad auf der Motorwelle ein verhältnismäßig großer Platzbedarf im Inneren des Gerätegehäuses.

0157128

Der Erfindung liegt die Aufgabe zugrunde, elektrisch betriebene Geräte für das Bearbeiten und Zubereiten von Nahrungsmitteln der eingangs näher gekennzeichneten Art derart weiter zu verbessern, daß die genannten Nachteile bekannter Ausführungsformen solcher Geräte beseitigt werden. Insbesondere soll für die Gestaltung und Ausbildung von Rad und Flügelrad eine solche Lösung gefunden werden, die die Herstellung- und Montagearbeiten reduziert und bei der der Platzbedarf für diese Teile im Gerätegehäuseinneren auf ein Minimum reduziert wird.

Dieses Ziel ist erfindungsgemäß dadurch erreicht, daß eines der beiden Räder für den Riemen unmittelbar als Lüfterrad ausgebildet ist. Diese erfindungsgemäße Ausbildung hat gegenüber dem Bekannten wesentliche Vorteile. Zunächst kann auf die Herstellung und auf die Anbringung eines zusätzlichen Lüfterrades ganz verzichtet werden. Damit entfallen auch besondere Befestigungselemente, mit denen das Lüfterrad drehfest auf der Motorwelle anzubringen ist. Ferner ergibt sich ein wesentlich geringeres Einbaumaß, weil ja auf die bisher übliche Hintereinanderanordnung von Rad für den Zahnriemen und separatem Lüfterrad verzichtet wird. Stattdessen wird im Gehäuseinneren des Gerätes nur so viel Platz benötigt, wie für die Unterbringung eines Rades des Riemens sowieso erforderlich ist.

Da - wie erwähnt - bei der bekannten Ausführungsform das zusätzliche Lüfterrad direkt auf der Motorwelle angeordnet ist, läuft es mit großer Tourenzahl um, was mit einer starken Geräuschbildung verbunden ist. Eine weitere Aufgabe der vorliegenden Erfindung besteht daher darin, Abhilfe zu schaffen, also eine solche Anordnung und Gestalt des Lüfterrades zu wählen, daß die beim Umlaufen entstehenden Geräusche im Vergleich mit dem Bekannten wesentlich reduziert werden.

zur Lösung dieser Aufgabe wird erfindungsgemäß vorgeschlagen, das auf der Arbeitswelle des Gerätes angeordnete Rad als Lüfterrad auszubilden. Dabei empfiehlt es sich, das Lüfterrad, welches auf der Arbeitswelle angeordnet ist, durchmessermäßig um ein Vielfaches größer zu halten als das auf der Motorwelle angeordnete zweite Rad des Riementriebes.

Im Gegensatz zum Bekannten sitzt somit das Lüfterrad - was ja darüber hinaus identisch ist mit dem einen Rad des Riementriebes - nicht mehr auf der schnell umlaufenden Motorwelle des Elektromotors sondern auf der mit geringeren Tourenzahl umlaufenden Arbeitswelle. Dabei muß berücksichtigt werden, daß eine Untersetzung durch die unterschiedliche Durchmesser aufweisende Welle des Riementriebes vorliegt, wobei das Rad kleineren Durchmessers auf der Motorwelle und das Lüfterrad mit seinem wesentlich größeren Durchmesser auf der Antriebswelle angeordnet ist. Bei einem elektrisch betriebenen Gerät für die Bearbeitung und Zubereitung von Nahrungsmitteln, bei dem die Räder mit dem zugeordneten Riemen in einem Fuß des Gehäuses angeordnet sind, empfiehlt es sich, den Boden des Gehäusefußes im Bereich des Lüfterrades Ansaugöffnungen für Frischluft aufweisen zu lassen und im Inneren des Gehäusefußes Kühlluftführungskanäle anzuordnen, die im Bereich unterhalb des Elektromotors enden. Auf diese Weise ist zunächst die Gewähr dafür gegeben, daß das Lüfterrad in hinreichender Menge Frischluft ansaugen und diese aber auch in den Bereich des Elektromotors überführen kann.

Im einfachsten Falle können Bereiche der Innenwandungen des Gehäusefußes unmittelbar als Luftführungskanäle ausgebildet sein. Dies kann vorzugsweise durch bereichsweises Profilieren der Innenwand oder auch durch dort angeformte Rippen geschehen.

Es ist aber auch möglich, im Gehäusefuß Einsätze anzubringen, die der Kühlluftführung dienen. In beiden Fällen enden die Kühlluftführungen unterhalb des Elektromotors, so daß von dort aus die Kühlluft die Außenflächen des Elektromotors gut erreichen kann.

Zweckmäßig ist es, das Lüfterrad eine Vielzahl von Schaufeln aufweisen zu lassen, deren eines Ende jeweils an der Nabe oder einem diesem zugeordneten Teil und dessen anderes Ende jeweils an der Innenseite des die Zähne für einen Zahnriemen tragenden Außenringes befestigt ist.

Die Schaufeln des Lüfterrades können dabei eine an sich bekannte Ausbildung und Gestaltung haben. Dabei besteht - wenn es die Platzverhältnisse im Gehäuseinneren zulassen sollten - auch die Möglichkeit, solche grundsätzlich bekannten Schaufeln anzuordnen, die hinsichtlich ihrer Breitenabmessungen die der Nabe oder des Außenringes überragen.

Auf der Zeichnung ist die Erfindung in mehreren Ausführungsbeispielen dargestellt und zwar zeigen:

Fig. 1    ein erfindungsgemäß ausgebildetes, elektrisch betriebenes Gerät
          für die Bearbeitung und Zubereitung von Nahrungsmitteln in Vorderansicht, teilweise geschnitten,

Fig. 2    das elektrisch betriebene Gerät für die Bearbeitung und Zubereitung
          von Nahrungsmitteln gemäß Fig. 1 in Draufsicht, teilweise weggebrochen,

Fig. 3    eine erste Ausführungsform eines Lüfterrades für das elektrisch
          betriebene Gerät nach der Fig. 1 in Draufsicht,

Fig. 4    im vergrößerten Maßstab einen Teilschnitt durch das elektrisch
          betriebene Gerät für die Bearbeitung und Zubereitung von Nahrungsmitteln nach Fig. 1, teilweise weggebrochen,

Fig. 5    ein Knetwerkzeug für das elektrisch betriebene Gerät für die Bearbeitung und Zubereitung von Nahrungsmitteln nach Fig. 1 in Draufsicht und im verkleinerten Maßstab,

Fig. 6    das Knetwerkzeug gemäß der Fig. 5 im Schnitt,

Fig. 7    einen für das elektrisch betriebene Gerät nach Fig. 1 bestimmten
          Adapter mit einem daran lösbar angeordneten Messer, teilweise
          in Seitenansicht, teilweise im Schnitt,

Fig. 8    eine Draufsicht auf das Messer gemäß der Fig. 7, jedoch im verkleinerten Maßstab,

Fig. 9    einen für das elektrisch betriebene Gerät gemäß Fig. 1 bestimmten
          Adapter mit einer lösbar damit verbundenen Sahnescheibe, teilweise
          in Seitenansicht, teilweise im Schnitt,

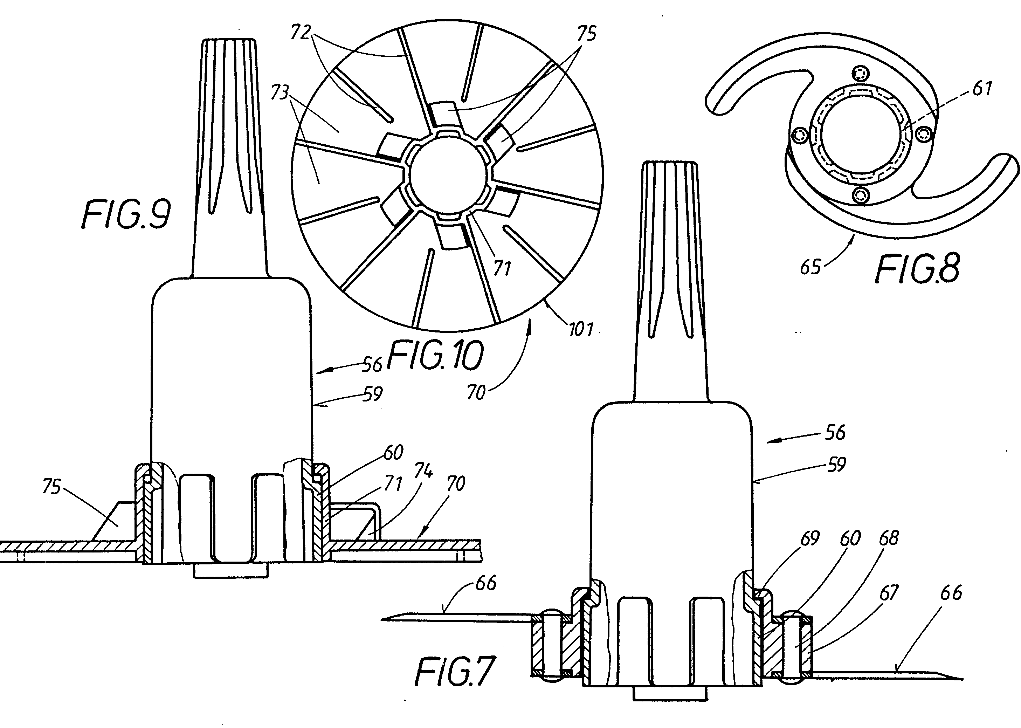

Fig. lo    eine Draufsicht auf die Sahnescheibe gemäß der Fig. 9, jedoch im verkleinerten Maßstab,

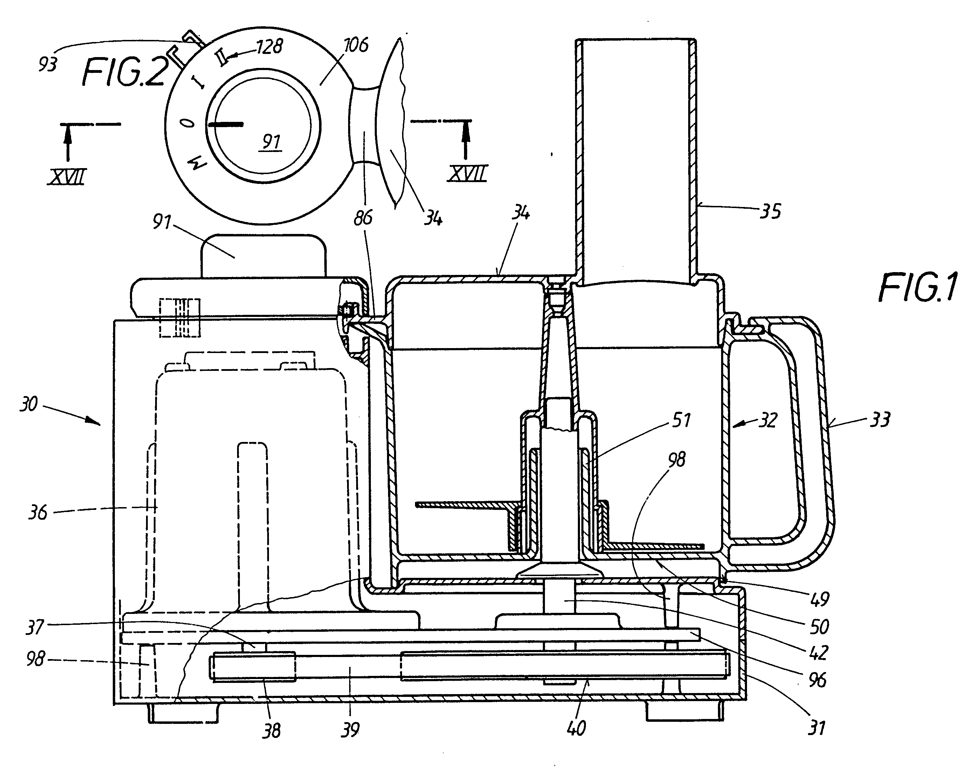

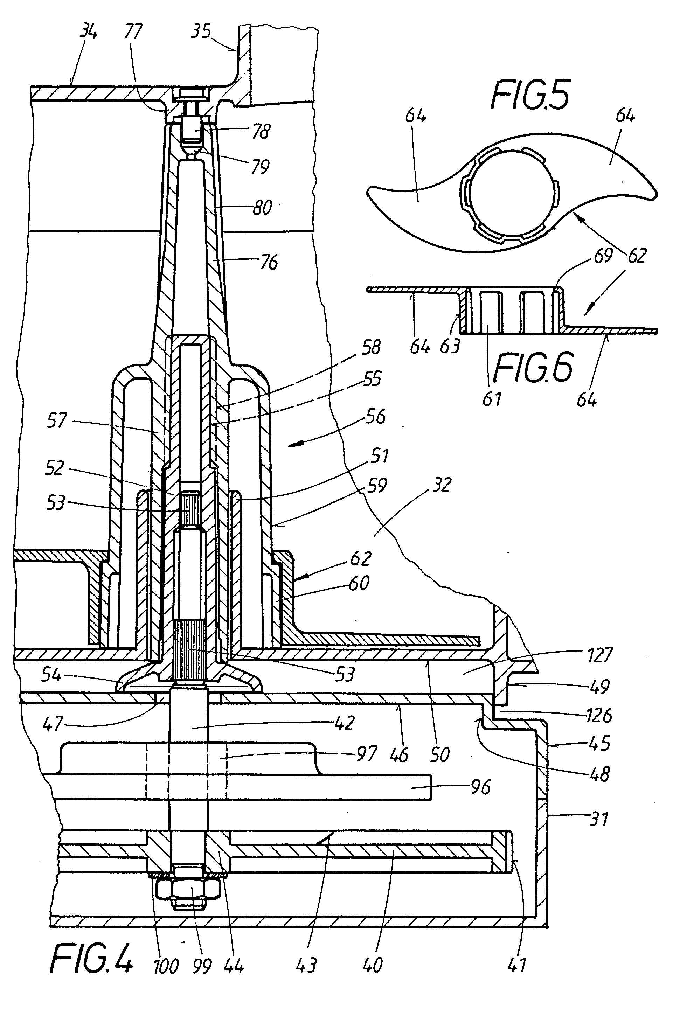

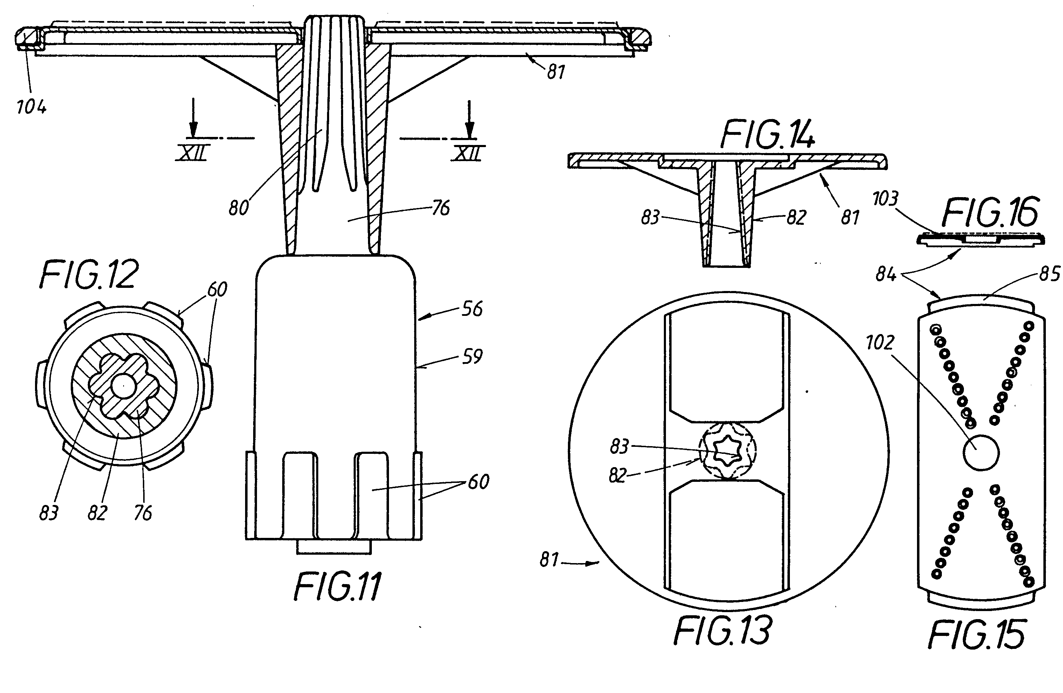

Fig. 11    einen für das elektrisch betriebene Gerät für die Bearbeitung und Zubereitung von Nahrungsmitteln gemäß Fig. 1 bestimmten Adapter mit einem lösbar daran befestigten Werkzeugträger, teilweise in Seitenansicht, teilweise geschnitten,

Fig. 12    einen Schnitt durch den Adapter mit Werkzeugträger gemäß der Fig. 11 entlang der Linie XII-XII;

Fig. 13    eine Draufsicht auf den Werkzeugträger gemäß der Fig. 11, jedoch im verkleinerten Maßstab,

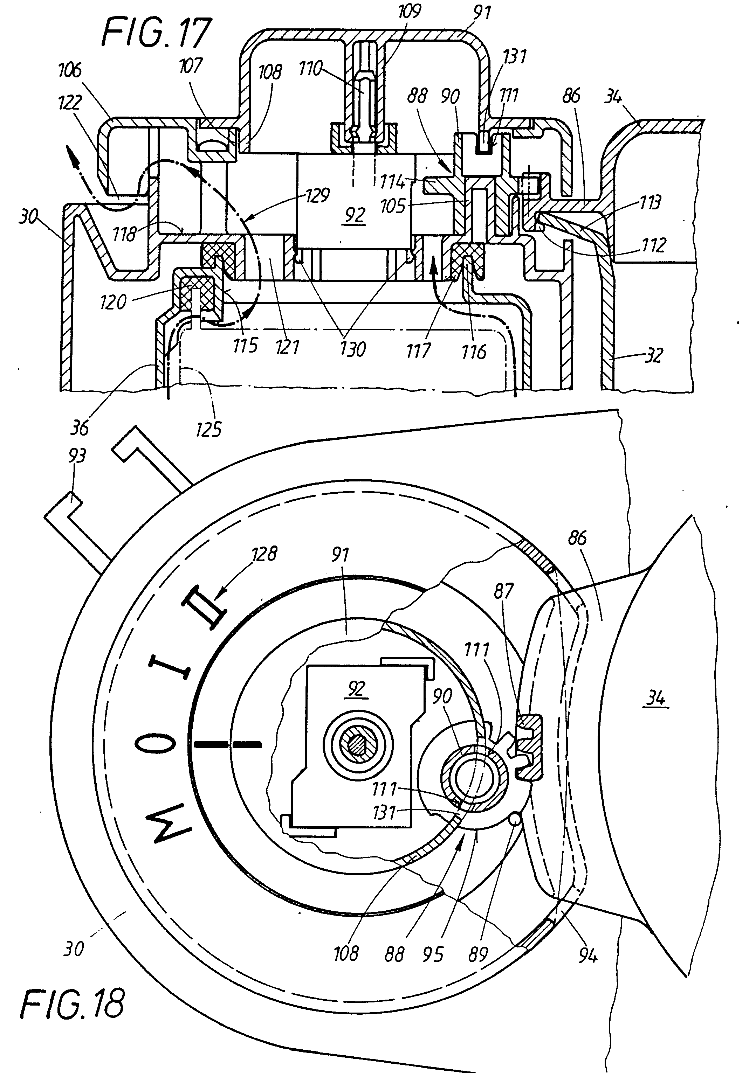

Fig. 14    einen Längsschnitt durch den Werkzeugträger gemäß der Fig. 13,

Fig. 15    in Draufsicht eine Raspelscheibe, die dem Werkzeugträger gemäß den Fig. 13 und 14 zugeordnet ist,

Fig. 16    die Raspelscheibe gemäß der Fig. 15 im Schnitt,

Fig. 17    einen Schnitt durch das Gehäuse des elektrisch betriebenen Gerätes für die Bearbeitung und Zubereitung von Nahrungsmitteln gemäß Fig. 2, entlang der Linie XVII-XVII der Fig. 1, teilweise weggebrochen,

Fig. 18    eine Draufsicht auf das Gehäuse gemäß Fig. 17, teilweise weggebrochen und teilweise geschnitten, dargestellt in der Schaltbereitschaftslage des Schalters,

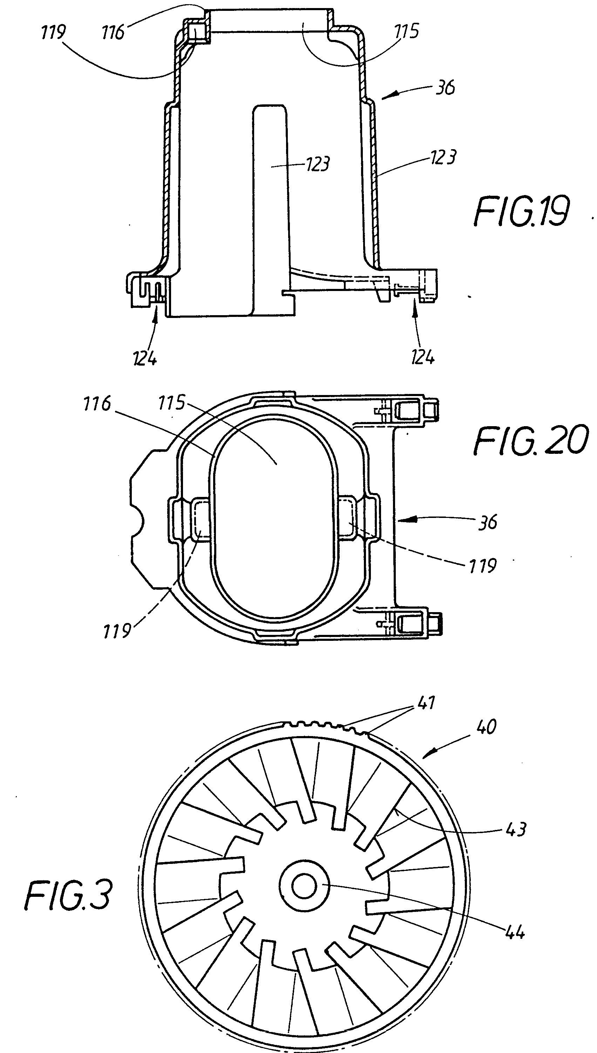

Fig. 19    eine Motorabdeckung für den Elektromotor des elektrisch betriebenen Gerätes für die Bearbeitung und Zubereitung von Nahrungsmitteln gemäß der Fig. 1 und

Fig. 2o    eine Draufsicht auf die Motorabdeckung gemäß der Fig. 19.

Es sei zunächst vorausgeschickt, daß in den Figuren der Zeichnungen nur diejenigen Teile eines elektrisch betriebenen Gerätes für die Bearbeitung und Zubereitung von Nahrungsmitteln dargestellt sind, die für das Verständnis der Erfindung von Bedeutung sind. Es fehlen insbesondere die elektrischen Zuleitungen und die Verdrahtungen sowie die mit ihnen zusammenwirkenden Schalt- und Steuereinrichtungen. Alle fehlenden Teile können einen an sich b4kannten Aufbau haben.

Das dem Ausführungsbeispiel zugrunde gelegte elektrisch betriebene Gerät für die Bearbeitung und Zubereitung von Nahrungsmitteln hat - wie aus der Fig. 1 der Zeichnung ersichtlich - ein Gehäuse 3o, in welchem der Elektromotor und Steuerungs- und Schalteinrichtungen des Gerätes untergebracht sind. Das Gehäuse 3o hat einen Gehäusefuß 31, wobei Gehäuse 3o und Gehäusefuß 31 - wie die Fig. 1 erkennen läßt - im wesentlichen L-förmig gestaltet sind. Auf der neben dem Gehäuse 3o liegenden Oberfläche des Gehäusefußes 31 ist ein generell mit 32 bezeichneter Aufnahmebehälter (Topf) aufgestellt. Der Aufnahmebehälter 32 ist am Gerätefuß 31 in bekannter Weise gegen Abheben zu sichern, wie z.B. durch bajonettverschlußartige Halter. Der Aufnahmebehälter 32 hat einen angeformten Handgriff 33 und einen abnehmbaren Deckel 34, der seinerseits mit einem Einfüllstutzen 35 ausgestattet ist, durch den in bekannter Weise das Zuführen von zu zerkleinernden Nahrungsmitteln erfolgt. Auch der Deckel 34 ist am Aufnahmebehälter 32 durch beispielsweise Unterfassen von Vorsprüngen gesichert.

In dem Gehäuse ist ein an sich bekannter Elektromotor 125 untergebracht, der in der Fig. 1 der Zeichnung nicht sichtbar, jedoch in der Fig. 17 strichpunktiert dargestellt ist. Der Elektromotor 125 sowie eine Motorabdeckung 36 werden von einer Trägerplatte 96 aufgenommen, die sich im wesentlichen über die gesamte Länge des Gehäusefußes 31 erstreckt. Die Trägerplatte 96 wirkt mit Abstützungen 98 zusammen, die den Wandungen des Gehäusefußes 31 innenliegend angeformt sind und für eine Lagesicherung der Trägerplatte 96 sorgen. Dabei wirken die Abstützungen 98 von unterschiedlichen Seiten her auf die Trägerplatte 96 ein.

Der Elektromotor 125 hat eine Motorwelle 37, deren freies Ende in den Hohlraum des Gehäusefußes 31 hineinragt und dort ein Rad 38 trägt, welches mit einem Riemen, vorzugsweise mit einem Zahnriemen 39, zusammenwirkt. Dieser Zahnriemen 39 wird - wie die Fig. 1 erkennen läßt - über ein im Durchmesser wesentlich größeres Antriebsrad 4o herumgeführt. Dieses Antriebsrad 4o ist erfindungsgemäß als Lüfterrad ausgebildet und hat an seiner Umfangsfläche liegend eine Vielzahl von Zähnen 41, die mit den nicht näher bezeichneten Gegenzähnen des Zahnriemens 39 in an sich bekannter Weise zusammenwirken.

Das als Lüfterrad ausgebildete Antriebsrad 4o ist auf dem in den Hohlraum des Gehäusefußes 31 hineinragenden Ende einer Arbeits- bzw. Werkzeugwelle 42 angeordnet. Gemäß dem Ausführungsbeispiel nach der Fig. 4 ist das Lüfterrad 4o auf dem Ende der Antriebswelle 42 mittels einer Mutter 99 unter Zwischenschaltung einer Scheibe loo gehalten. Daneben können aber auch andere bekannte Befestigungsarten zum Halten des Lüfterrades 4o auf der Werkzeug- oder Antriebswelle 42 benutzt werden. Insbesondere können im Bereich der Nabe 44 des Lüfterrades 4o Befestigungsmöglichkeiten für das freie Ende der Werkzeug- oder Antriebswelle 42 vorgesehen sein. Beispielsweise ist die formschlüssige Anordnung einer unrunden Mutter in der Nabe 44 des Lüfterrades 4o möglich.

Dem Lüfterrad 43 ist eine Vielzahl von Schaufeln 43 zugeordnet. Hinsichtlich der Ausbildung und der Gestaltung dieser Schaufeln 43 gibt es zahlreiche Möglichkeiten. Zwei dieser möglichen Ausführungsformen sind in den Fig. 3 und 4 der Zeichnung dargestellt. Die Schaufeln 43 können im übrigen nicht nur eine an sich bekannte Ausbildung sondern auch in ebenfalls an sich bekannter Weise mit der Nabe 44 verbunden sein. Auch ist eine einstückige Ausführung denkbar. Soweit es die Platzverhältnisse im Hohlraum des Gehäusefußes zulassen und soweit es keine zu große Geräuscherhöhung beim Betrieb gibt, ist es auch möglich, die Schaufeln über den Rand des Lüfterrades 4o hinausragen zu lassen.

Wie die Fig. 1 und 4 der Zeichnungen erkennen lassen, ist der Gehäusefuß 31 zweiteilig ausgestaltet, wobei die beiden Teile mit bekannten - und daher fortgelassenen - Mitteln zusammengehalten werden können. Der untere, nicht näher bezeichnete Teil des Gehäusefußes 31 ruht auf einer Fläche, beispielsweise auf einer Tischplatte. Der Oberteil 45 hat einen glatten Durchbruch 47 zum Durchgriff der Arbeits- bzw. Werkzeugwelle 42. Dieser Durchbruch liegt im Bereich der Decke 46 des Oberteiles 45, wobei die Decke 46 über einen Absatz 48 in die Mantelfläche übergeht. Der Aufnahmebehälter 32 (Topf) hat an seiner Unterseite Vorsprünge 49, die dem Boden 5o des Aufnahmebehälters 32 unmittelbar angeformt sind. Die Vorsprünge 49 - die im Abstand voneinander liegen - wirken mit der Außenfläche des Absatzes 48 zusammen, so daß eine Querverschiebung des Aufnahmebehälters 32 auf dem Aufstellfuß 31 nicht möglich ist. Durch die Anordnung von mehreren Vorsprüngen 49 und durch die Bildung eines Spaltes 126 zur benachbarten Fläche des Oberteiles 45 des Gehäusefußes 31 sind Öffnungen gebildet, durch die eine gegebenenfalls in den Zwischenraum 127 zwischen Decke 46 und Boden 5o gelangte Flüssigkeit in noch zu schildernder Weise nach außen befördert werden kann.

Dem Boden 5o des Aufnahmebehälters 32 ist ein hülsenartiger Vorsprung 51 angeformt. Dieser ragt - wie die Fig. l und 4 der Zeichnung erkennen lassen - verhältnismäßig  weit in das Innere des Aufnahmebehälters 32 hinein. In den hülsenartigen Vorsprung 51 ragt das obere Ende der Arbeits- bzw. Werkzeugwelle 42. Die Arbeits- bzw. Werkzeugwelle 42 ist durchmessermäßig mehrfach abgesetzt und hat etwa im Bereich des hülsenartigen Vorsprunges 51 liegend zwei im Abstand voneinander angeordnete Befestigungsbereiche 53, die als Rändelungen an ihrer Außenfläche ausgebildet sind. Diese Befestigungsbereiche 53 dienen zur festen Verbindung mit einer generell mit 52 bezeichneten Isolierhülse, die einstückig aus einem Kunststoff hergestellt und nach oben hin verschlossen ist. Das gegenüberliegende andere Ende der Isolierhülse 52 ist als scheibenartiger Fuß 54 ausgebildet, der - wie die Fig. 4 am besten erkennen läßt - in den Zwischenraum 127 zwischen dem Deckel 46 und dem Boden 5o des Aufnahmebehälters 32 angeordnet ist. Dieser scheibenartige Fuß 54 sorgt dafür, daß Flüssigkeiten, die beim Gebrauch des elektrisch betriebenen Gerätes durch den hülsenartigen Vorsprung 51 hindurch aus dem Aufnahmebehälter 32 kommend in den Zwischenraum 127 gelangt sein sollten, aus diesem wieder hinausgeschleudert werden und dabei durch den erwähnten Spalt 126 bzw. durch die Freiräume zwischen den Vorsprüngen 49 ins Freie gelangen können.

An der Außenseite der Isolierhülse 52 sind Kupplungsvorsprünge 55 vorgesehen, die mit Gegenkupplungen 58 eines generell mit 56 bezeichneten Adapters zusammenw-irken. In Draufsicht gesehen bilden die Kupplungsvorsprünge 55 der Isolierhülse 52 eine etwa wellenförmige oder auch zahnradförmig verlaufende Fläche, die sich zu einem Kreis schließt. In die Wellentäler bzw. die Zahnlücken greifen zwischen den Kupplungsvorsprüngen 55 die Gegenkupplungen 58 des Adapters 56 ein, wobei die Kraftangriffsflächen im wesentlichen senkrecht aufeinanderstehen. Auf diese Weise ist der Adapter 56 auf Mitnahme gekuppelt. Dabei sind die Gegenkupplungen 58 so gestaltet, daß ein paßgerechtes formschlüssiges Zusammenwirken mit den Kupplungen 55 erfolgt.

Wie aus der Fig. 4 der Zeichnung am besten erkennbar ist, hat der Adapter ein inneres Teilstück 57, das nach unten hin offen ist. Der untere Bereich des inneren Teilstückes 57 greift in den Zwischenraum zwischen der Innenwand des hülsenartigen Vorsprunges 51 und der Außenwand der Isolierhülse 52, wobei in der in Fig. 4 gezeigten Lage der Kupplungsvorsprünge 55 der Isolierhülse 52 mit den Gegenkupplungen 58 an der Innenwand des inneren Teilstückes 57 miteinander in Eingriff stehen. Dies bedeutet, daß der Adapter 57 mit der Isolierhülse 52 auf Mitnahme gekuppelt ist.

Unter Bildung eines Zwischenraumes hat der Adapter 56 auch ein äußeres Teilstück 59, welches nach oben hin geschlossen, nach unten hin jedoch offen ist. Im Bereich der unteren Außenfläche des äußeren Teilstückes 59 hat der Adapter 56 Gegenkupplungen 6o, die mit Kupplungen 61 eines Werkzeuges zusammenwirken. Die Gegenkupplungen 6o sind im gewählten Ausführungsbeispiel untereinander gleichgestaltet und gleichmäßig verteilt über den unteren Bereich der Umfangsfläche des äußeren Teilstückes 59 angeordnet. Auch hier gilt, daß in Draufsicht gesehen der untere Bereich des äußeren Teilstückes 59 wellenförmige oder zahnradförmige Flächen aufweist, die sich zu einem Kreis schließen. In die Wellentäler bzw. Zahnlücken zwischen den Gegenkupplungen 6o greifen die Kupplungen 61 passend ein.

Zu den Kupplungen und Gegenkupplungen sowohl von Adapter 56 als auch von der Isolierhülse 52 gilt, daß in den dargestellten Ausführungsformen diese in Richtung der Längsachse des Adapters 56 bzw. der Isolierhülse 52 verlaufen. In Abwandlung dieser dargestellten Ausführungsbeispiele können die Kupplungen und Gegenkupplungen auch mit dieser Längsachse jeweils einen Winkel einschließen. Entsprechendes gilt auch für die mit dem Adapter 56 zusammenwirkenden Kupplungen der Werkzeuge, die eine angepaßte Schrägstellung bei dieser Variante haben müssen.

Die Gegekupplungen 6o des äußeren Teilstückes 59 des Adapters 56 arbeiten mit Kupplungen 61 von Werkzeugen (Arbeitswerkzeugen) zusammen. Erfindungsgemäß werden ein- und demselben Adapter 56 mehrere unterschiedlich gestaltete Werkzeuge zugeordnet, die in Abhängigkeit von den durchzuführenden Arbeiten von dem Benutzer wahlweise herangezogen werden und jeweils in einfacher Weise lösbar mit dem Adapter 56 verbunden werden.

0157128

In den Figuren der Zeichnungen sind insgesamt drei unterschiedlich gestaltete Werkzeuge dargestellt. Die Fig. 7 und 8 zeigen ein generell mit 65 bezeichnetes Messer. Dieses besitzt zwei sichelförmig gestaltete Messerflügel 66, die in bekannter Weise angeschärft sind und die - vergl. dazu die Fig. 7 der Zeichnung - in unterschiedlichen Ebenen angeordnet sind. Dabei ist der eine Messerflügel 66 dem Boden 5o des Aufnahmebehälters 32 zugekehrt, während der diametral gegenüberliegende andere Messerflügel 66 in einem größeren Abstand von diesem Boden 5o liegt. Die beiden Messerflügel 66 sind dabei durch Niete 68 mit der Nabe 67 des Messers 65 fest verbunden. Die Nabe 67 hat dabei auch die schon erwähnten Kupplungen 61, die mit den Gegenkupplungen 6o des äußeren Teilstückes 59 des Adapters 56 zusammenwirken. Am Messer 65 ist ein Auflagerand 69 vorgesehen, der mit einem nicht näher bezeichneten Vorsprung des Adapters 56 zusammenwirkt. Aus der in Fig. 7 dargestellten Lage - der Arbeitslage - ergibt sich, daß das Abstützen des Auflagerandes 69 des Messers 65 in einer solchen Höhe am Adapter 56 erfolgt, daß der untere der beiden Messerflügel 66 in einem geringen Abstand vom Boden 5o des Aufnahmebehälters 32 angeordnet ist.

In den Fig. 5 und 6 der Zeichnung ist ein weiteres, wahlweise mit dem Adapter 56 zu kuppelndes Werkzeug dargestellt. Es handelt sich dabei um ein generell mit 62 bezeichnetes Knetwerkzeug. Dieses Knetwerkzeug 62 ist einstückig aus einem Werkstoff, beispielsweise aus einem Kunststoff, hergestellt und hat zwei untereinander gleichgestaltete Flügel 64, die jeweils gekrümmte Begrenzungsflächen aufweisen, die in eine Spitze auslaufen. Die Flügel 64 sind untereinander gleichgestaltet, jedoch in unterschiedlicher Höhe der Nabe 63 des Knetwerkzeuges 62 angeformt. Die Nabe 63 hat wiederum Kupplungen 61, die mit den Gegenkupplungen 6o des Adapters 56 zusammenwirken. Die Kupplungen 61 des Knetwerkzeuges 62 können gleichgestaltet sein wie die des Messers 65. Auch hat das Knetwerkzeug 62 wiederum einen Auflagerand 69, der in der schon geschilderten Weise mit einer nicht näher bezeichneten, an der Außenfläche des Adapters 56 liegenden Schulter zusammenwirkt.

Als drittes, wahlweise mit dem Adapter 56 zu kuppelndes Werkzeug ist die in den Fig. 9 und 1o dargestellte Sahnescheibe 7o vorhanden. Die Sahnescheibe 7o hat auf ihrem dem Boden des Aufnahmebehälters 32 zugekehrten Seite eine Vielzahl von sternförmig angeordneten Rippen 72, die jedoch unterschiedlich lang bemessen sind, und zwar wechselt jeweils eine kurze mit einer langen Rippe 72 ab, wobei die längere Rippe 72 jeweils in die als Mitnehmernabe 71 ausgebildete Nabe der Sahnescheibe 7o einmündet. Die längeren Rippen 72 schliessen Luftleitkanäle 73 ein, deren untere Wand beim bestimmungsgemäßen Gebrauch von der Innenfläche des Bodens 46 des Aufnahmebehälters 32 gebildet wird. Die Rippen 72 liegen mit ihren äußeren Flächen auf dem Boden 5o des Aufnahmebehälters 32 auf. Den Luftleitkanälen 73 sind im Bereich der Mitnehmernabe 71 Lufteinlaßöffnungen 74 zugeordnet, während Luftauslaßöffnungen lol durch den am Umfangsbereich der Sahnescheibe 7o zwischen benachbarten Rippen 72 vorhandenen Freiraum gebildet werden. Die Lufteinlaßöffnungen 74 sind durch taschenartig nach oben aufgewölbte Wandteile 75 gebildet, wobei jeweils zwei längere benachbarte Rippen 72 ein eine Lufteinlaßöffnung 74 bildender Wandteil 75 zugeordnet ist.

Im übrigen hat die Mitnehmernabe 71 wiederum Kupplungen 61, die denjenigen des Messers 65 bzw. des Knetwerkzeuges 62 entsprechen. Diese Kupplungen 61 wirken wiederum mit den Gegenkupplungen 6o des Adapters 56 zusammen, nur mit dem Unterschied, daß der Auflagerand 69 in der Arbeitslage gemäß Fig. 9 nunmehr entfernt von der nicht näher bezeichneten Schulter im Bereich der Gegenkupplungen 6o des Adapters 56 angeordnet ist. Dies geschieht, um zu gewährleisten, daß die Außenflächen der Rippen 72 - wie gewollt - auf dem Boden 5o des Aufnahmebehälters 32 aufliegen. Auf der anderen Seite ist der Auflagerand 69 als Mitnehmer benutzbar, nämlich dann, wenn der Adapter 56 zusammen mit der Sahnescheibe 7o von der Isolierhülse 52 aus dem Aufnahmebehälter 32 herausgezogen werden soll.

Die Sahnescheibe 7o dient nicht nur zum Bereiten von Schlagsahne sondern auch zum Zubereiten von Eischnee, Majonaise und dergl. Bei Benutzung einer solchen Sahnescheibe 7o wird nicht nur ein Rühreffekt erzielt sondern es gelingt, mit ihr die sahnige Konsistenz des Rührgutes durch Verteilung feinster Luftbläschen im Rührgut zu erzielen. Dabei wird durch die Drehung der Sahnescheibe 7o das Rührgut infolge der Fliehkraft im Eck-Ringbereich des Bodens 5o des Aufnahmebehälters 32 wulstartig angeordnet und mit feinsten Luftbläschen durchsetzt. Durch diese intensive Arbeitsweise der Sahnescheibe 7o ist die benötigte Zeit, selbst zur Herstellung größerer Mengen von Schlagsahne, Eischnee, Majonaise od.dgl. gering.

Wie die Fig. 1 und 11 der Zeichnung erkennen lassen, ist bei der dargestellten Ausführungsform des Adapters 56 nicht nur vorgesehen, diesen in seinem unteren, also dem Boden 5o des Aufnahmebehälters 32 zugekehrten Bereich wahlweise eines der unterschiedlich gestalteten Werkzeuge zuzuordnen sondern es wird auch die Möglichkeit gegeben, im oberen, also dem Deckel 34 zugekehrten Bereich entweder direkt mit dem Adapter 56 Arbeitswerkzeuge zu kuppeln oder dort einen Werkzeugträger 81 lösbar zu befestigen, der seinerseits Arbeitswerkzeuge, wie Raffelscheibe, Pommes-Frites-Scheibe, Reibscheibe, Parmesanscheibe od. dgl. trägt.

Um dieses zu ermöglichen, hat der Adapter 56 eine Verlängerung 76, die durchmessermäßig gegenüber dem unteren Bereich des Adapters 56 verkleinert ist. Im gewählten Ausführungsbeispiel erstreckt sich die Verlängerung 76 bis etwa zum Deckel 34. Dort ist ein Lager 77 in einer Verdickung des Deckels 34 vorgesehen, welches zur Unterbringung eines Lagerstiftes 78 dient, dessen aus dem Lager 77 herausragendes Ende in eine Bohrung 79 des vorderen freien Endes der Verlängerung 76 des Adapters 56 eingreift. Eine derartige Lagerstelle läßt es zu, daß der Deckel 34 ohne weiteres vom Aufnahmebehälter 32 entfernt werden kann. Dies deshalb, weil der Lagerstift 58 leicht aus der Bohrung 79 der Verlängerung 76 des Adapters 56 herausgezogen werden kann. Umgekehrt greift beim Aufsetzen des Deckels 34 dessen Lagerstift wieder in diese Bohrung 79 ein.

An der Außenfläche der Verlängerung 76 des Adapters 56 sind - und zwar im oberen, dem Deckel 34 zugekehrten Bereich liegend - Gegenkupplungen 8o vorgesehen, die in ihrem Aufbau und auch in ihrer Wirkungsweise denjenigen Gegenkupplungen 6o entsprechen, die im unteren bEreich des Adapters 56 vorhanden sind. Es ist lediglich zu vermerken, daß insoweit Unterschiede bestehen, als sich die Längen der Gegenkupplungen 6o und 8o voneinander unterscheiden können. Diese Gegenkupplungen 8o können - was in den Zeichnungen nicht dargestellt ist - unmittelbar mit einem an sich bekannten Arbeitswerkzeug zusammenwirken, welches das durch den Einfüllstutzen 35 des Deckels 34 zugeführte Gut zerkleinert.

Gemäß den Fig. 11 bis 16 der Zeichnungen ist jedoch eine andere Ausführungsform gewählt, nämlich die, daß der Verlängerung 76 ein generell mit 81 bezeichneter Werkzeugträger zugeordnet ist, der die Gestalt einer Trägerscheibe aufweist. Der Werkzeugträger 81 hat eine Nabe 82, die von einer Bohrung durchsetzt wird, an deren Innenwandungen Kupplungen 83 angeordnet sind, die mit den Gegenkupplungen 8o der Verlängerung 76 des Adapters 56 in der schon geschilderten Weise zusammenwirken. Das Querschnittsbild gemäß der Fig. 12 zeigt, daß auch in diesem Falle die Kupplungen 83 und Gegenkupplungen 8o wellenförmige, sich zu einem Kreis ergänzende Gestalt aufweisen.

Bei dem Ausführungsbeispiel nach der Fig. 11 der Zeichnung ist die Verlängerung 56 bis zum freien Ende hin mit Gegenkupplungen 8o versehen. In Abwandlung dieser Ausführungsform kann man die Gegenkupplungen 8o auch vorher enden lassen und das vordere freie Ende der Verlängerung 76 zylinderförmig gestalten. Somit läuft in diesem Falle das freie Ende der Verlängerung 76 in einen außen glattwandigen Zylinder mit konstantem Durchmesser aus, der kleiner ist als der Außendurchmesser der Verlängerung 76 und etwa den Kerndurchmesser des die Kupplungsrippen 8o aufweisenden Schaftes der Verlängerung 76 entspricht. Die wirksame Stützhöhe dieses Absatzes kann man der Höhe der Nabe des aufzunehmenden Werkzeuges anpassen, um bei unterschiedlich hohen Werkzeugen immer den gleichen Abstand zur Unterkante des Einfüllschachtes zu gewährleisten.

Ferner ist bei der Ausführungsform nach der Fig. 11 vorgesehen, daß das freie Ende der Nabe 82 des Werkzeugträgers 81 sich auf dem nicht näher bezeichneten, durch unterschiedliche Durchmesser gebildeten Absatz des Adapters 56 abstützt. Auch hier kann man eine Abänderung vornehmen, indem man die Nabe 82 kürzer bemißt, so daß sie nicht mit dem erwähnten Absatz des Adapters 56 in Wirkverbindung tritt. Man kann in diesem Falle durch Absatzbildung zwischen Kupplungen und Gegenkupplungen für eine Lagefixierung des Werkzeuges auf der Verlängerung 76 des Adapters 56 sorgen.

Ein Werkzeug, welches lösbar mit dem Werkzeugträger 81 verbunden werden kann, ist in den Fig. 15 und 16 der Zeichnung dargestellt, und zwar handelt es sich bei diesem Werkzeug um eine Raspelscheibe 84. Die Raspelscheibe 84 ist ein in Draufsicht gesehen etwa rechteckig gestalteter Körper, der an seinen beiden Schmalseiten je eine Verlängerung 85 aufweist, die aus der Grundebene der Raspelscheibe 84 herausgebogen ist, um den Rand 1o4 des Werkzeugträgers 81 zu untergreifen, wie dies in der Fig. 11 ersichtlich ist. Die Raspelscheibe 84 hat ferner einen mittig angeordneten Durchbruch 1o2, der von einem nach unten, also in Richtung auf den Adapter 56 ragenden, umlaufenden Kragen 1o3 umgeben ist. Durch den Durchbruch 1o2 der Raspelscheibe 84

greift das vordere Ende der Verlängerung 76. Dabei hat man es in der Hand, den mit der Verlängerung 76 zu kuppelnden Werkzeugen unterschiedlich lang bemessene Kragen 1o3 zuzuordnen. Die Rapselscheibe 84 oder ein anderes - grundsätzlich bekanntes - Werkzeug kann in bekannter Weise auf das Nahrungsmittel einwirken, welches durch den Einfüllstutzen 35 des Deckels 34 zugeführt werden kann. In Abhängigkeit von den durchzuführenden Arbeiten kann man dann dem Werkzeugträger 81 ein anderes Werkzeug als die dargestellte Rapselscheibe 84 zuordnen.

Zu dem erfindungsgemäß ausgebildeten Gerät zum Bearbeiten und Zubereiten von Nahrungsmitteln gehört auch eine Sicherheitseinrichtung, deren Ausbildung und Gestalt aus den Fig. 17 und 18 der Zeichnung ersichtlich ist. Durch eine solche Sicherheitseinrichtung soll ein Inbetriebsetzen des Gerätes bei abgenommenem Deckel 34 verhindert werden, was zu Verletzungen des Benutzers führen könnte, weil die umlaufenden Arbeitswerkzeuge frei zugänglich wären.

Im gewählten Ausführungsbeispiel ist der Deckel 34 des Aufnahmebehälters 32 mit einer Verlängerung 86 versehen, deren vorderer freier Bereich als Verzahnung 87 ausgebildet ist. Diese Verzahnung 87 wirkt mit einem Schaltrad bzw. Ritzel 88 zusammen, welches auf dem Gehäuse 3o drehbar gelagert ist. Dem Schaltrad bzw. Ritzel ist auch ein Anschlag 89 zugeordnet, der in der Stellung des Schaltrades 88 gemäß Fig. 18 an dem einen Ende einer Ausnehmung 95 anliegt. Bestandteil des Schaltrades bzw. Ritzels 88 ist auch ein rohr- förmiger Ansatz 9o, der im Bezug auf eine mittlere scheibenförmige Nabe 114 des Schaltrades 88 nach beiden Seiten hin vorsteht. In die untere Bohrung des hülsenförmigen Ansatzes 9o greift ein Vorsprung 1o5 des Gehäuses 3o. Auf die- sem Vorsprung 1o5 ist das Schaltrad 88 drehbar gelagert.

Zu dem Gehäuse 3o gehört auch eine Abdeckung 1o6, die den oberen Abschluß des Gehäuses 3o bildet und in ihrer Mitte liegend einen Durchbruch 1o7 auf- weist, in den vorstehende Randbereiche 1o8 eines Drehknopfes 91 eingrei- fen. An der Innenwand seiner Decke liegend hat der Drehknopf 91 einen Hohlzapfen 1o9, der zur Unterbringung eines Lager- bzw. Betätigungsstiftes 11o dient, der seinerseits einem Schalter 92 zugeordnet ist. Dieser Schalter 92 kann einen an sich bekannten Aufbau haben, so daß in den Fig. 17 und 18 der Zeichnung nur das Gehäuse des Schalters 92 veranschaulicht ist. Der Schalter 92 kann im übrigen über Rastverbindungen 130 mit Teilen des Gehäuses 3o lösbar verbunden werden.

Der obere Teil des rohrförmigen Ansatzes 9o des Schaltrades 88 hat zwei Schlitze 111, die so angeordnet sind, daß der Randbereich lo8 beim Betätigen des Drehknopfes 91 in sie eintreten und damit eine Drehung des Schaltrades 88 verhindern kann. Die Begrenzungswandungen der Schlitze 111 sind gekrümmt, wobei der Krümmungsmittelpunkt mit dem Mittelpunkt des Drehknopfes 91 zusammenfällt. Nachzutragen bleibt noch, daß die Verlängerung 86 des Deckels 34 durch einen Aufnahmeschlitz 94 des Gehäuses hindurchgreift, derart, daß die Verzahnung 87 innerhalb des Gehäuses 3o zu liegen kommt.

Die Wirkungsweise der als Sicherheitsschalter ausgebildeten Schalteinrichtung des elektrisch betriebenen Gerätes zum Zubereiten bzw. zum Behandeln von Nahrungsmitteln ist die folgende:

Zur Inbetriebnahme des elektrischen Gerätes wird dessen Aufnahmebehälter 32 auf den Gehäusefuß 31 in der aus der Fig. 1 ersichtlichen Weise aufgestellt. Der Deckel 34 des Aufnahmebehälters 32 wird dann derart verdreht, daß seine Verlängerung 86 in den Aufnahmeschlitz 94 des Gerätes 3o eintaucht. Bei dieser Bewegung untergreift ein im Querschnitt L-förmiger Bereich 112 die Schnaupe 113 des Aufnahmebehälters 32, wie dies die Fig. 17 der Zeichnung erkennen läßt.

Beim Verdrehen der Verlängerung 86 des Deckels 34 kommt dessen Verzahnung 87 in Wirkverbindung mit den Zähnen des Schaltrades bzw. Ritzels 88, das auf dem hohlen Vorsprung lo5 des Gehäuses 3o drehbar gelagert ist. Die Zähne des Schaltrades 88 sind an der Umfangsfläche der scheibenförmigen Nabe 114 angeordnet. Die Zähne erfassen jedoch - wie die Fig. 18 zeigt, nur einen Teilbereich der Umfangsfläche der Nabe 114. Ein anderer Teil der Umfangsfläche ist mit der Ausnehmung 95 versehen, in die zur Drehbegrenzung des Schaltrades 88 der Anschlagstift 89 eingreift. Die Lage der Ausnehmung 95 bestimmt den Drehwinkel des Schaltrades 88.

Das Schaltrad 88 ist über die Verzahnung 87 der Verlängerung 86 des Deckels 34 in die in der Fig. 18 dargestellte Schaltbereitschaftslage gedreht worden.

In dieser Lage übergreift eine im Ringansatz lo8 des Drehknopfes 91 angeordnete Ausnehmung 131 den rohrförmigen Ansatz des Schaltrades 88. Dabei befinden sich durch die Verzahnung 87 der Verlängerung 86 am Deckel 34 die Schlitze 111 des Schaltrades 88 in einer solchen Lage, daß der Ringansatz lo8 bei Drehung des Drehknopfes 91 die Schlitze 111 passieren kann, um bei Betätigen des Drehknopfes 91 den Schalter 92 in eine seiner Schaltstellungen überführen zu können. Damit der Benutzer sehen kann, welche Schaltstellung eingeschaltet ist, sind Markierungen 128 vorgesehen, vergl. dazu die Fig. 18. In dieser Verriegelungsstellung ist der Deckel 34 nicht vom Aufnahmebehälter 32 abnehmbar.

Auf der anderen Seite bleibt festzuhalten, daß der Randbereich lo8 des Drehknopfes 91 nur dann in den Schlitz 111 des rohrförmigen Ansatzes 9o eingreifen kann, wenn die in Fig. 18 dargestellte Schaltbereitschaftsstellung eingenommen ist.

Wie aus der Fig. 18 der Zeichnung ersichtlich, ist an der Außenfläche des Gehäuses 3o ein Kabelhalter 93 angeordnet.

Dem Elektromotor 125 des Gerätes ist eine in den Fig. 19 und 2o dargestellte, generell mit 36 bezeichnete Motorabdeckung zugeordnet. Diese hat einmal die Aufgabe, die Geräuschbildung beim Betrieb des Gerätes herabzusetzen und zum anderen dient sie im Zusammenwirken mit Außenwandungen des Elektromotors 125 der Führung der Kühlluft, die vom Lüfterrad 4o erzeugt wird.

Die Motorabdeckung 36 ist im gewählten Ausführungsbeispiel als einstückiger, aus Kunststoff gefertigter Körper hergestellt. Die Motorabdeckung 36 ist auf ihrer dem Drehknopf 91 zugekehrten Seite mit einem ovalen Durchbruch 115 versehen, der von einem umlaufenden, hochgezogenen Rand 116 umgeben ist. Dieser Rand 116 dient zur Unterbringung einer leistenförmigen Dichtung 117, die mittels eines nicht näher bezeichneten Schlitzes auf den Rand 116 aufgesteckt ist. Die Dichtung 117 wirkt mit ihr benachbarten Bereichen einer Zwischenwand 118 des Gehäuses 3o zusammen.

Die Motorabdeckung 36 hat ferner in der Nähe des Randes 116 liegend einen kammerartigen Aufnahmeraum 119, in dem ein Pufferstück 12o zur Halterung des Motors angeordnet ist, wie dies die Fig. 17 erkennen läßt. Die gleiche Fig. 17 zeigt auch, daß in der Zwischenwand 118 Öffnungen 121 vorhanden sind, durch die die Kühlluft im Sinne der dort eingezeichneten Pfeile 129 ins Freie strömen kann. Dies geschieht nach mehrfacher Umlenkung durch einen Spalt 122 zwischen dem Gehäuse 3o und der Abdeckung 1o6. An der Außenseite liegend hat die Umfangsfläche der Motorabdeckung 36 Versteifungsrippen 123, die sich in Achslängsrichtung der Motorabdeckung 36 erstrecken.

Die Motorabdeckung 36 ist auch in ihrem unteren, dem Gehäusefuß 31 zugekehrten Ende offen. Damit kann die vom Lüfterrad 4o in Bewegung gesetzte Luft auch in den Zwischenraum zwischen den Außenwandungen des Elektromotors 125 und der Innenwand der Motorabdeckung 36 gelangen und von dort schließlich in Richtung der in Fig. 17 eingezeichneten Pfeile 129 durch den Spalt 122 ins Freie gelangen.

In ihrem unteren Bereich ist die Motorabdeckung 36 mit der Trägerplatte 96 lösbar verbunden. Als Verbindungsmittel können Einsteckverbindungen, Schnapp- oder Rastverbindungen benutzt werden, also solche Verbindungen, die sowohl ein leichtes Anbringen als auch bei Bedarf ein einfaches Wiederentfernen der Motorabdeckung 36 von der Trägerplatte 96 zulassen. Diese Verbindungen sind in der Fig. 19 generell mit 124 bezeichnet.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So ist in den Fig. 1 und 4 der Zeichnung für den Adapter 56 eine doppelte Lagerung vorgesehen, denn der Adapter 56 sitzt dabei nicht nur in seinem unteren Bereich auf der Isolierhülse 52 auf sondern er ist unter Benutzung des Lagerstiftes 78 am Deckel 34 des Aufnahmebehälters 32 zusätzlich gelagert. In Sonderfällen kann auf diese zweite Lagerstelle im Bereich des Deckels 34 verzichtet werden. Bei einer solchen Ausführungsform wird die Verlängerung 76 nur bis in die Nähe der Innenwand des Deckels 34 geführt, ohne dort gelagert zu sein. Bei einer solchen Ausführungsform kann auf die Anordnung einer Bohrung im Bereich des freien Endes der Verlängerung 76 des Adapters verzichtet werden.

Die Ausbildung und auch die Anzahl der dem Adapter 56 zugeordneten Arbeitswerkzeuge kann mannigfach variiert werden, d.h. das Messer, das Knetwerkzeug, die Sahnescheibe können eine andere als die dargestellte Ausführungsform erhalten. Darüber hinaus können auch andere an sich bekannte Werkzeuge mit Kupplungen versehen sein, damit sie in der erfindungsgemäßen Art und Weise lösbar mit dem Adapter 56 verbunden werden können. Auch ist es möglich, die Gestalt und Ausbildung sowohl der Kupplungen als auch der Gegenkupplungen von Werkzeug und Adapter zu variieren. Dies gilt insbesondere für die Querschnittsgestaltung dieser Teile.

Auch dem Werkzeugträger 81 können andere als die dargestellte Raspelscheibe 84 zugeordnet werden. Der Einsatz von Raffelscheibe, von Pommes-Frites-Scheiben, Reibscheiben oder Parmesanscheiben ist möglich. Dabei ist grundsätzlich auch daran gedacht, diese Arbeitswerkzeuge direkt mit der Verlängerung 76 des Adapters lösbar zu verbinden, wobei in einem solchen Falle auf die Verwendung eines Werkzeugträgers 81 verzichtet werden könnte.

Ferner wäre es denkbar, in Abänderung der Ausführungsform gemäß den Fig. 17 und 18 der Zeichnung dem Schaltrad bzw. Ritzel 88 eine Feder zuzuordnen. Diese Feder belastet das Schaltrad 88 und verhindert eine ungewollte Fehlbedienung.

In dem Boden des Gehäusefußes 31 können im Bereich des Lüfterrades 40 liegend Ansaugöffnungen für Frischluft vorgesehen sein. Dabei empfiehlt es sich, den Boden nicht unmittelbar auf einer Tischfläche od.dgl. aufruhen zu lassen sondern am Boden Füße vorzusehen, die die Gewähr dafür geben, daß der Boden einen der Höhe dieser Füße entsprechenden Abstand von der Tischplatte hat. Dadurch kann ein ungehindertes Ansaugen von Frischluft erfolgen. Ferner ist es zweckmäßig, im Inneren des Gehäusefußes Luftleitkanäle vorzusehen, die die vom Lüfterrad erzeugte Frischluft in den Bereich unterhalb des Elektromotors fördern, damit dann von dort aus eine Weiterleitung in Richtung Elektromotor erfolgen kann. Im einfachsten Falle kann man die Luftleitkanäle den Innenwandungen des Gehäusefußes 31 zuordnen, beispielsweise indem man dort Leitrippen od.dgl. anordnet. Darüber hinaus gibt es aber auch die Möglichkeit, für sich hergestellte Luftleitkanäle zu benutzen, die dann in das Innere des Gehäusefußes eingesetzt werden.

Anstelle des in den Figuren der Zeichnungen dargestellten Adapters 56 könnten auch zwei unterschiedlich gestaltete und wahlweise benutzbare Adapter vorgesehen sein. Dabei könnte der eine dann benutzt werden, wenn in dem Aufnahmebehälter 32 nur solche Arbeitswerkzeuge eingesetzt werden, die im Bereich des Bodens desselben arbeiten. In einem solchen Falle brauchte der Adapter nur so lang bemessen zu sein, daß er etwa gleich hoch ist wie die Isolierhülse, die ihn lösbar aufnimmt. Die zweite Ausführungsform des Adapters wäre dann mit der Verlängerung 76 ausgestattet. Dieser Adapter würde dann benutzt, wenn entweder nur Arbeiten im Bereich des Einfüllstutzens des Deckels durchgeführt werden sollen oder wenn alternativ sowohl im unteren als auch im oberen Teil des Aufnahmebehälters die Bearbeitung bzw. Zubereitung von Nahrungsmitteln durchgeführt werden soll.

0157128

PATENTANWÄLTE

DIPL.-PHYS. BUSE · DIPL.-PHYS. MENTZEL · DIPL.-ING. LUDEWIG

Unterdörnen 114 · Postfach 200210 · 5600 Wuppertal 2 · Fernruf (0202) 55 70 22/23/24 · Telex 8 591 606 wpat

89

5600 Wuppertal 2, den

Kennwort: Lüfterrad

Firma Robert Krups Stiftung & Co. KG., Heresbachstr. 29, 5650 Solingen-Wald

---------------------------------------------------------------------------

Elektrisch betriebenes Gerät für die Bearbeitung und Zubereitung
von Nahrungsmitteln aller Art

---------------------------------------------------------------------------

Bezugszeichenliste :

| | | |
|---|---|---|
| 30 | - | Gehäuse |
| 31 | - | Gehäusefuß |
| 32 | - | Aufnahmebehälter (Topf) |
| 33 | - | Handgriff (von 32) |
| 34 | - | Deckel (von 32) |
| 35 | - | Einfüllstutzen (an 34) |
| 36 | - | Motorabdeckung (Zweitgehäuse) |
| 37 | - | Motorwelle |
| 38 | - | Rad (auf 37) |
| 39 | - | Zahnriemen |
| 40 | - | Antriebsrad = Lüfterrad |
| 41 | - | Zähne (von 40) |
| 42 | - | Arbeits-Werkzeugwelle |
| 43 | - | Schaufeln (von 40) |
| 44 | - | Nabe (von 40) |
| 45 | - | Oberteil (von 31) |
| 46 | - | Decke (von 45) |
| 47 | - | Durchbruch (in 46) |

| | | |
|---|---|---|
| 48 | - | Absatz (von 46) |
| 49 | - | Vorsprung (von 50) |
| 50 | - | Boden (von 32) |
| 51 | - | hülsenartiger Vorsprung (von 50) |
| 52 | - | Isolierhülse |
| 53 | - | Befestigungsbereich (an 42) |
| 54 | - | scheibenartiger Fuß (von 52) |
| 55 | - | Kupplungsvorsprünge (an 52) |
| 56 | - | Adapter |
| 57 | - | inneres Teilstück (von 56) |
| 58 | - | Gegenkupplungen (an 57) |
| 59 | - | äußeres Teilstück (von 56) |
| 60 | - | Gegenkupplungen (an 59) |
| 61 | - | Kupplungen (am Werkzeug) |
| 62 | - | Knetwerkzeug |
| 63 | - | Nabe (von 62) |
| 64 | - | Flügel (von 62) |
| 65 | - | Messer |
| 66 | - | Messerflügel |

0157128

67 - Nabe (von 65)
68 - Niet (für 66)
69 - Auflagerand (von 62 bzw. 65)
7o - Scheibe (Sahnescheibe)
71 - Mitnehmernabe (an 7o)
72 - Rippen (von 7o)
73 - Luftleitkanäle (von 7o)
74 - Lufteinlaßöffnungen
75 - Wandteil (Begrenzung von 74)
76 - Verlängerung (von 56)
77 - Lager (an 34)
78 - Lagerstift
79 - Bohrung (in 76)
8o - (obere) Gegenkupplung (an 76)
81 - Werkzeugträger (Trägerscheibe)
82 - Nabe (von 81)
83 - Kupplungen (an 82)
84 - Raspelscheibe
85 - Verlängerung (an 84)
86 - Verlängerung (an 34)
87 - Verzahnung
88 - Schaltrad
89 - Anschlag
9o - rohrförmiger Ansatz (an 88)
91 - Drehknopf
92 - Schalter
93 - Kabelhalter
94 - Aufnahmeschlitz
95 - Ausnehmung
96 - Trägerplatte
97 - Lager
98 - Abstützungen
99 - Mutter
1oo - Scheibe
1o1 - Luftauslaßöffnungen
1o2 - Durchbruch (in 84)

1o3 - Kragen
1o4 - Rand (von 81)
1o5 - Vorsprung (an 3o)
1o6 - Abdeckung (von 3o)
1o7 - Durchbruch
1o8 - Ringansatz (von 91)
1o9 - Hohlzapfen (an 91)
11o - Lagerstift
111 - Schlitz
112 - L-förmiger Bereich
113 - Schnaupe (von 32)
114 - Nabe (von 88)
115 - Durchbruch (an 36)
116 - Rand (von 115)
117 - Dichtung
118 - Zwischenwand (von 3o)
119 - kammerartige Aufnahme
12o - Pufferstück (in 119)
121 - Öffnung (in 118)
122 - Spalt
123 - Versteifungsrippe (an 36)
124 - Verbindungsmittel (an 36)
125 - Elektromotor
126 - Spalt (zwischen 49 und 45)
127 - Zwischenraum (zwischen 5o und 46)
128 - Markierung
129 - Pfeil
13o - Rastverbindung
131 - Ausnehmung (in 1o8)

PATENTANWÄLTE    0157128

DIPL.-PHYS. BUSE · DIPL.-PHYS. MENTZEL · DIPL.-ING. LUDEWIG
Unterdörnen 114   Postfach 200210 · 5600 Wuppertal 2   Fernruf (0202) 55 70 22/23/24 · Telex 8591 606 wpat

89

5600 Wuppertal 2, den

Kennwort: Lüfterrad

Firma Robert Krups Stiftung & Co. KG., Heresbachstr. 29, 565o Solingen 19

------------------------------------------------------------------------

Elektrisch betriebenes Gerät für die Bearbeitung und Zubereitung von Nahrungsmitteln aller Art

------------------------------------------------------------------------

A n s p r ü c h e :

1. Elektrisch betriebenes Gerät für die Bearbeitung und Zubereitung von Nahrungsmitteln aller Art, mit einem Gehäuse zur Unterbringung des Elektromotors und von zugehörigen Schalt- und Steuereinrichtungen, mit einem neben dem Gehäuse angeordneten Aufnahmebehälter, in dessen Inneren ein Arbeitswerkzeug angeordnet ist, dessen Arbeitswelle an ihrem freien Ende ein Rad trägt, das seinerseits einen Riemen, vorzugsweise einen Zahnriemen, aufnimmt, der über ein weiteres Rad geführt ist, welches auf dem freien Ende der Motorwelle befestigt ist und mit einem Lüfterrad zum Erzeugen von Kühlluft für den Elektromotor,

   d a d u r c h   g e k e n n z e i c h n e t ,

   daß eines der beiden Räder (38, 4o) für den Riemen (39) unmittelbar als Lüfterrad ausgebildet ist.

2. Elektrisch betriebenes Gerät nach Anspruch 1, dadurch gekennzeichnet, daß das auf der Arbeitswelle (42) des Gerätes angeordnete Rad als Lüfterrad (4o) ausgebildet ist.

3. Elektrisch betriebenes Gerät nach Anspruch 1 und 2, dadurch gekennzeichnet, daß das Lüfterrad (4o) durchmessermäßig um ein Vielfaches größer ist als das auf der Motorwelle (37) angeordnete Rad.

0157128

4. Elektrisch betriebenes Gerät nach einem oder mehreren der vorangehenden Ansprüche 1 bis 3, bei dem die Räder mit dem zugeordneten Riemen in einem Fuß des Gehäuses angeordnet sind, dadurch gekennzeichnet, daß der Boden des Gehäusefußes (31) im Bereich des Lüfterrades (4o) Ansaugöffnungen für Frischluft aufweist und daß im Inneren des Gehäusefußes (31) Kühlluftführungskanäle angeordnet sind, die im Bereich unterhalb des Elektromotors (125) enden.

5. Elektrisch betriebenes Gerät nach einem oder mehreren der Ansprüche 1 bis 3, dadurch gekennzeichnet, daß das Lüfterrad (4o) eine Vielzahl von Schaufeln (43) aufweist, deren eines Ende jeweils an der Nabe (44) oder einem dieser zugeordnetem Teil und deren anderes Ende jeweils an der Innenseite des die Zähne (41) für einen Zahnriemen tragenden Außenringes befestigt ist.

FIG.2

93

128

106

91

XVII

XVII

86

34

34

35

91

FIG.1

30

51

32

33

36

98

49

50

37

42

98

96

38

39

40

31

1/6

0157128

0157128

FIG.4

FIG.5

FIG.6

FIG.9

FIG.10

FIG.8

FIG.7

72

73

75

71

101

70

61

65

56

59

75

60

74

71

70

56

59

69

60

68

66

67

66

FIG.14

104

81

XII    XII

80

76

FIG.12

60

56

59

60

83  82  76

FIG.11

83

82

81

FIG.13

83  82  81

103

FIG.16

84

85

102

FIG.15

4/6

0157128

0157128

FIG.17

FIG.18

0157128

119  116                    115

123        123        36

*FIG.19*

124              124

116    115

119            36

119            119

*FIG.20*

41

40

43

44

*FIG.3*

Europäisches
Patentamt

**EUROPÄISCHER RECHERCHENBERICHT**

0157128

Nummer der Anmeldung

EP 85 10 1416

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 183 645  (ELECROSTAR GmbH) <br> * Das ganze Dokument * <br><br> --- | 1-5 | A 47 J  43/046 <br> A 47 J  43/08 |
| X | DE-B-1 041 660  (BOSCH) <br> * Figur 1; Spalte 3, Zeilen 15-23 * <br><br> ----- | 1 | |

**RECHERCHIERTE SACHGEBIETE (Int. Cl.4)**

A 47 J

Der vorliegende Recherchenbericht wurde für alle Patentansprüche erstellt.

| Recherchenort <br> DEN HAAG | Abschlußdatum der Recherche <br> 13-06-1985 | Prüfer <br> SCHARTZ J. |
|---|---|---|